# EUROPÄISCHE PATENTANMELDUNG

(11) **EP 1 122 643 A1**
(43) Veröffentlichungstag der Anmeldung: **08.08.2001**
(21) Anmeldenummer: 00102590.7
(22) Anmeldetag: 07.02.2000
(51) Int. Cl.: G06F 9/46

(54) **Schaltungsanordnung und Verfahren zur Hardware-Interruptbehandlung**

(71) Anmelder: SIEMENS AKTIENGESELLSCHAFT, 80333 München (DE)
(72) Erfinder: Brinkmann, Raik, Dipl.-Inf., 81371 München (DE)

(57) **Zusammenfassung**

Bei dieser Schaltungsanordnung und dem dazugehörigen Verfahren werden zu einem Prozessor extern Registersätze bereitgestellt die Daten des aktuellen Programmlaufs vor einer Interruptroutine sowie Daten der Interruptserviceroutinen zwischenspeichern. Eine Umschaltung zwischen den einzelnen Registersätzen erfolgt durch eine einer Auswahleinheit zugeführten Registerkennung.

## Beschreibung

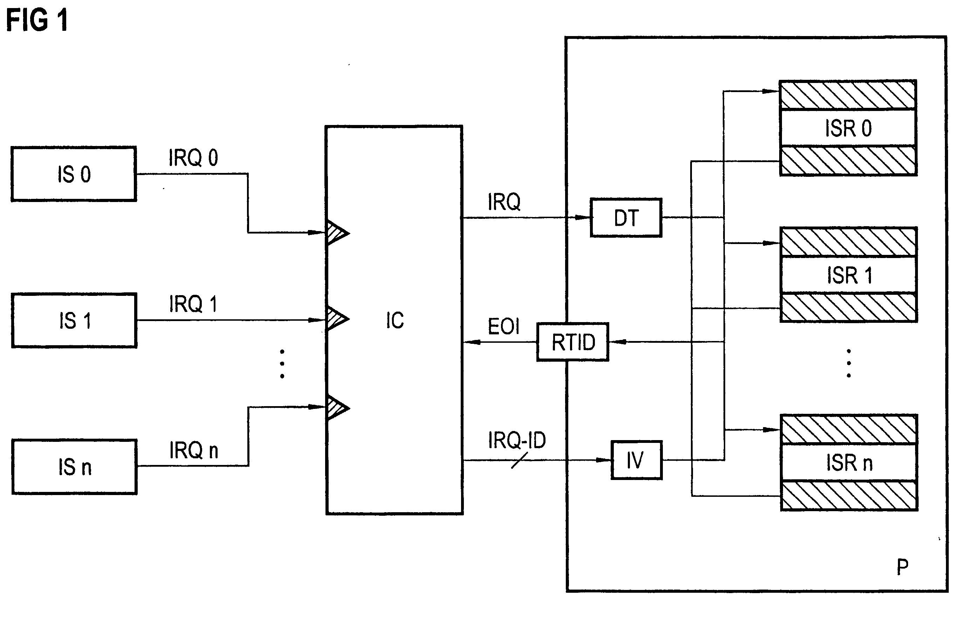

Für ein System, das einen Prozessor und ihn umgebende Systemkomponenten aufweist, die über Interruptroutinen mit dem Prozessor kommunizieren, wird jeder Interruptquelle eine bestimmte Priorität und eine Interruptserviceroutine zugeordnet. Wird ein Interrupt der Priorität ausgelöst, so soll die ihm zugeordnete Interruptserviceroutine ausgeführt werden, wenn die Priorität größer ist als die anderen zu bedienenden Interrupts. Laufende Interruptserviceroutinen mit geringerer Priorität werden dadurch unterbrochen. Wird in einem Prozessor ein Hardware-Interrupt ausgelöst, läuft jeweils ein zeitaufwendiger Vorgang ein sogenannter Context-Switch ab. Dieser zeitaufwendige Vorgang bringt den Nachteil mit sich, daß in hohem Maße das Echtzeitverhalten des Prozessors beeinträchtigt wird. Zudem weisen eine Vielzahl von bekannten Prozessorarchitekturen häufig nur eine beschränkte Möglichkeit auf um Interruptanfragen von den Hardware-Interruptquellen abzuarbeiten. Um diesen Engpaß zu Überwinden werden Interruptcontrollers eingesetzt. Der Ablauf der Interruptverarbeitung mit einem Interruptcontroller ist in Figur 1 beschrieben.

Die Behandlung einer Interruptroutine erfordert ein Retten und Restaurieren von Registerinhalten.

Dies bringt den weiteren Nachteil mit sich, daß durch Umspeichern von Registerinhalten viel Prozessorzeit und Speicherplatz benötigt wird.

Der Erfindung liegt die Aufgabe zugrunde, eine weitere Schaltungsanordnung und ein dazugehöriges Verfahren zur Behandlung von Unterbrechungsanforderungen anzugeben.

Die Lösung der Aufgabe ergibt sich aus den Merkmalen des Patentanspruchs 1 oder 7.

Die Erfindung bringt den Vorteil mit sich, daß lediglich die Kennung des Registersatzes des unterbrochenen Programms auf einem Stack gespeichert zu werden braucht.

Die Erfindung bringt den weiteren Vorteil mit sich, daß kein Umspeichern der Registerinhalte durchgeführt werden muß, so daß kein explizites Retten und Restaurieren der Registerinhalte durchgeführt werden muß.

Die Erfindung bringt den Vorteil mit sich, daß die Unterbrechungsroutinen schnell abgehandelt werden können.

Die Erfindung bringt den Vorteil mit sich, daß jeder Prozessortyp erweiterbar ist.

Weitere vorteilhafte Ausbildungen der Schaltungsanordnung und des Verfahrens sind in den Unteransprüchen angegeben.

Weitere Besonderheiten der Erfindung werden aus den nachfolgenden näheren Erläuterungen eines Ausführungsbeispiels anhand von Zeichnungen ersichtlich.

### Es zeigen:

- Figur 1: ein Prinzip eines Interruptsystems,
- Figur 2: eine Detailansicht des Interruptsystems,
- Figur 3: ein Ablaufdiagramm,
- Figur 4: eine Systemstruktur gemäß der Erfindung,
- Figur 5: eine Detailansicht und
- Figur 6: ein dazugehöriges Ablaufdiagramm.

In den Figuren 1, 2 und 3 wird ein bekanntes Interruptsystem in Verbindung mit einem Prozessor beschrieben.

Fig.1 zeigt das Prinzip eines Interruptsystems. Es besteht aus einer Mehrzahl von Interruptquellen IS 0, IS 1, IS 2, IS n, einem Interruptcontroller IC und einem Prozessor P. Im Prozessor P sind ein Interruptdetectormodul DT ein Interruptroutinen-Ende-Erkennungs-Modul RTID sowie eine Interruptvectortabelle IV, sowie Module zur Abhandlung von Interruptserviceroutinen ISR0, ISR1, ISR2,ISRn angeordnet. Die Interruptquellen IS 0, IS 1, IS 2, IS n sind über den Interruptcontroller IC mit dem Prozessor verbunden. Über die Signalleitungen werden die Interruptrequests IRQ0-n von den Interruptquellen IS 0, IS 1, IS 2, IS n zum Interruptdetectormodul DT versendet. Die Interruptrequests IRQ 0-n der Interruptquellen IS 0-n werden vom Interruptcontroller IC bedient. Der Interruptcontroller IC löst im Prozessors P einen Interruptrequest IRQ beim Prozessor P aus. Außerdem übergibt der Interruptcontroller IC eine Interruptrequest Kennung IRQ-ID der Interruptquelle IS an den Prozessor P. Der Prozessor P erkennt den Interruptrequest IRQ durch das Interruptdetectormodul DT und startet die zur Interruptrequest Kennung IRQ-ID gehörende Interruptserviceroutine ISR, deren Adresse in der Interrupt-Vector-Tabelle IV abgelegt ist. Der Interruptcontroller wird durch das Interruptroutinen-Ende-Erkennungs-Modul RTID mit einem Ende-der-Interruproutine EOI Signal über die Beendigung der Interruptroutine informiert. Ein Interruptrequest darf eine Interruptserviceroutine nur unterbrechen, wenn er eine höhere Priorität als die zur Zeit abzuarbeitende Interruptserviceroutine hat. Die Zuordnung der Interruptquellen IS 0, IS 1, IS 2, IS n zu den Prioritäten wird im Interruptcontroller IC vorgenommen. Die Maskierung der Interrupts erfolgt ebenfalls im Interruptcontroller IC. Der Interruptcontroller IC entscheidet, ob der aktuelle Prozessablauf im Prozessor P unterbrochen wird. Der Prozessorkern selbst hat nur eine Interruptleitung und unterscheidet die einzelnen Prioritäten nicht. Es wird vorausgesetzt, daß die Start-Adresse der Interruptserviceroutine ISR in der Interruptvectortabelle IV abgelegt ist. Diese Voraussetzungen treffen für fast alle gebräuchlichen Prozessoren und insbesondere für die hier betrachteten zu.

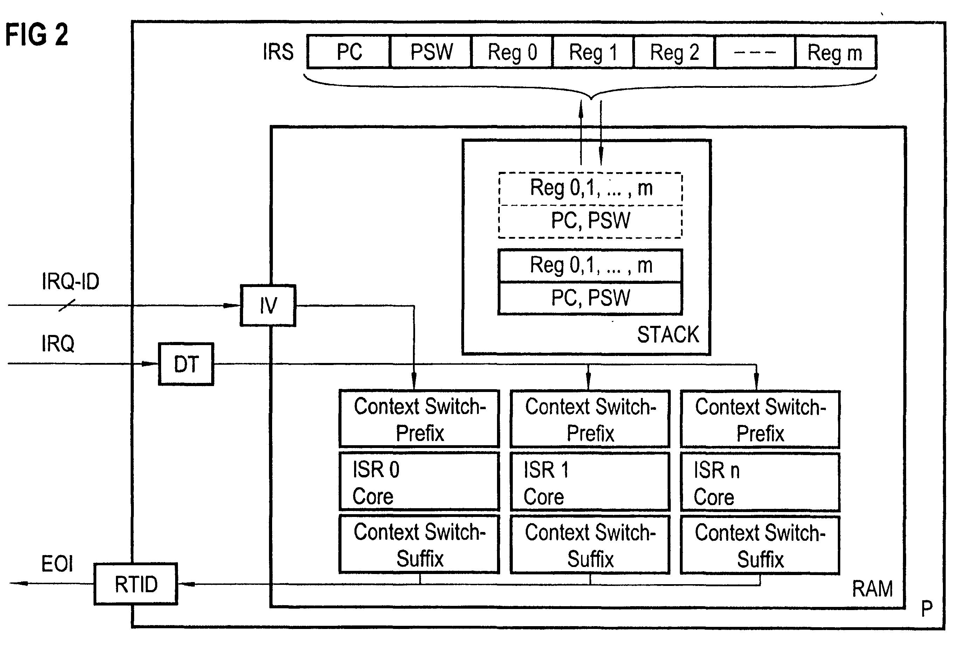

FIG. 2 zeigt eine Detailansicht des Prozessors P mit den bei einem Interrupt beteiligten Modulen. Dieses Interruptsystem weist im Prozessor P ein Module für Interruptvectoren IV, einen Interruptdetector DT, sowie ein Modul für eine Erkennung für eine Interruptroutinen-Ende-Erkennung RTID. Zur Interruptbehandlung stehen zudem ein Interner Registersatz IRS sowie ein Prozessorspeicher RAM zur Verfügung. Der Prozessorspeicher RAM weist Speicherbereiche für einen Stappelspeicher STACK sowie Speicherbereiche für Interruptserviceroutinen ISR0-n auf. Die Interruptservicerroutinen ISR0-n unterteilen sich jeweils in Speicherbereiche für einen Context-Switch-Prefix, einen Interruptserviceroutine ISR-Core und einen Context-Switch-Suffix. Einem im Prozessor P angeordneter Registersatz IRS ist ein Programmzähler PC, sowie Speicherbereiche für ein Prozessorstatuswort PSW und Arbeitsregister Reg0-m zugeordnet.

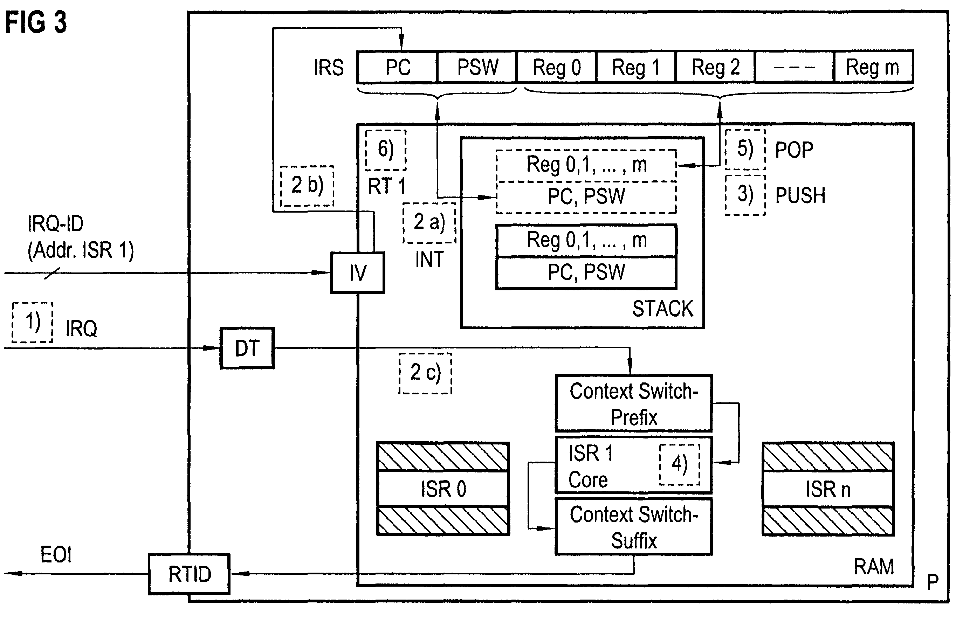

Fig. 3 zeigt einen Ablauf einer Interruptbehandlung im Prozessor P. Die Interruptbehandlung läuft in den folgenden Schritten ab:
1) Erkennen des Interruptrequestes IRQ durch das Interruptdetectormodul DT und beenden der gerade laufenden Instruktion sowie Leeren der Prozessor-Befehls-Pipeline
2) Ausführen des Befehls INT
   a) Retten des Inhalts des Programmzählers PC und des Prozessorstatusworts PSW oder Prozessorstatusregisters PSR auf den Prozessor-Stack STACK (Speicherbereich, auf den der Stack-Pointer zeigt.)
   b) Laden der Adresse (ISR1), die sich in der Interruptvectortabelle (IV) befindet in das PC-Register
   c) Fortsetzung des Programmlaufs an der Adresse (ISR1)
3)Ausführen des Context-Switch-Prefix von ISR1: Retten der Register (a,b,c,...) auf den Prozessor-Stack, die im Verlauf der ISR verändert werden sollen (PUSH-Befehl)
4)Ausführen des eigentlichen Codes der Interruptserviceroutine (ISR1), ISR1-Core
5)Ausführen des Context-Switch-Suffix: Restaurieren der Register (a,b,c,...) vom Prozessor-Stack, die vorher dorthin gerettet worden sind (POP-Befehl)
6)Ausführen des Befehls RTI (Return from Interrupt, letzte Instruktion im Context-Switch-Suffix): Restaurieren des PC (und PSW) vom Prozessor-Stack, Erhöhen des PC, Fortsetzen des unterbrochenen Programms, Erkennen der Ausführung des RTI-Befehls durch RTID und Weiterleitung dieses Ereignisses an den Interrptcontroller (IC, nicht in der Abbildung) durch das Signal EOI.

Die Schritte 1,2 und 6 sind fest im Prozessor verdrahtet und können in der Regel nicht verändert werden, sie benötigen je nach Prozessor zusammen zwischen 4 und 30 Takte. Die benötigten Takte für die Schritte 3 und 5 sind davon abhängig, wie viele Register gerettet und restauriert werden müssen. Für jedes Register ist ein PUSH- und ein POP-Befehl notwendig, die je nach Prozessor zwischen 1 und 5 Takte dauern. Wenn 4 Register betroffen sind, werden 4 bis 20 Takte verbraucht. Wird ein voller Context-Switch verlangt, müssen alle 8 bis 32 Register des Prozessors gerettet und restauriert werden, was entsprechend 8 bis 160 Takte sind.

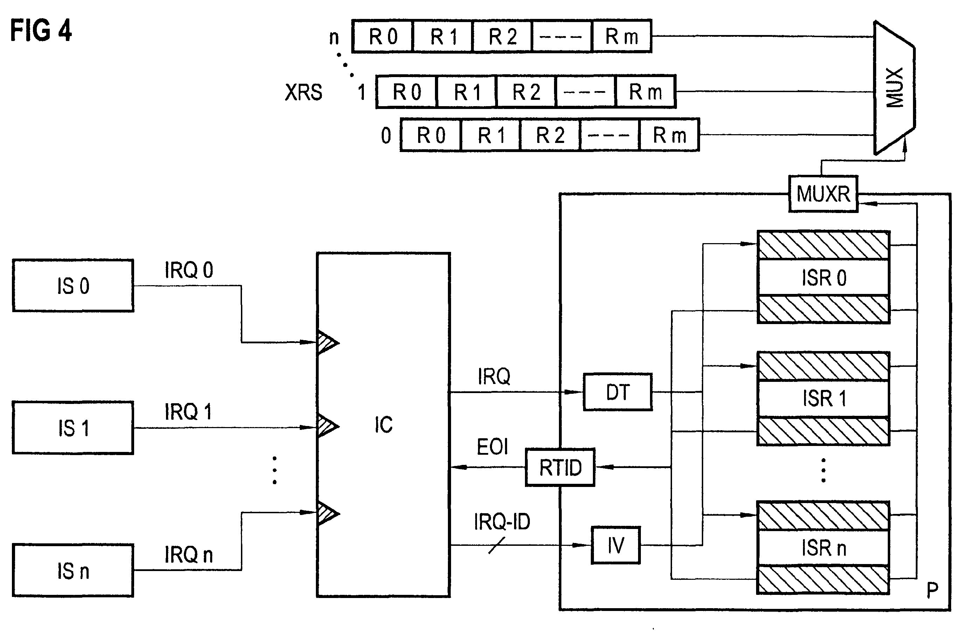

FIG 4. Zeigt eine Systemstruktur gemäß der Erfindung. Die Anordnung gemäß der Figur 1 ist gemäß der Erfindung um ein Multiplexerregister MUXR, einen Multiplexer MUX und externen Registersätzen XRS0-n erweitert. Der Prozessor P bleibt dabei intern unverändert. Es werden außerhalb des Prozessors P mindestens ein zusätzlicher Registersatz XRS0-n bereitgestellt. Die Registersätze XRS0-n können über einen Zugriffsmechanismus gebildet aus den Auswahleinheiten Multiplexerregister MUXR und Umschalter MUX angesteuert werden. Die einzelnen Registersätze XRS 0-n werden einzeln mit dem Prozessor P durch beschreiben des Multiplexregisters MUXR verbunden. Die externen Registersätze XRS 0-n die auch als ein zweiter Speicher bezeichnet werden können, lassen sich beispielsweise über den Prozessorspeicher RAM adressieren, dessen MSBs der Adressleitungen den Registersatz adressieren bzw. bestimmen. Über das Multiplexerregister MUXR, sowie dem Multiplexer MUX wird eine Kennung des Registersatzes XRS 0-n übergeben. Die Kennung des Registersatzes XRS 0-n kann beispielsweise im Prozessorspeicher RAM des Prozessors P gespeichert und als sog. Memory-Mapped-Register implementiert sein, das außerhalb des Prozessors lesbar ist (siehe Fig. 4) oder direkt mit einem Input/Outputeingang IO-Port des Prozessors P assoziiert werden. Die Auswahl des Registersatzes erfolgt durch den Prozessor P durch Schreiben des Multiplexerregisters MUXR also in die entsprechende Adresse im Prozessorspeicher RAM oder durch beschreiben des Input/Outputeingangs IO-Ports.

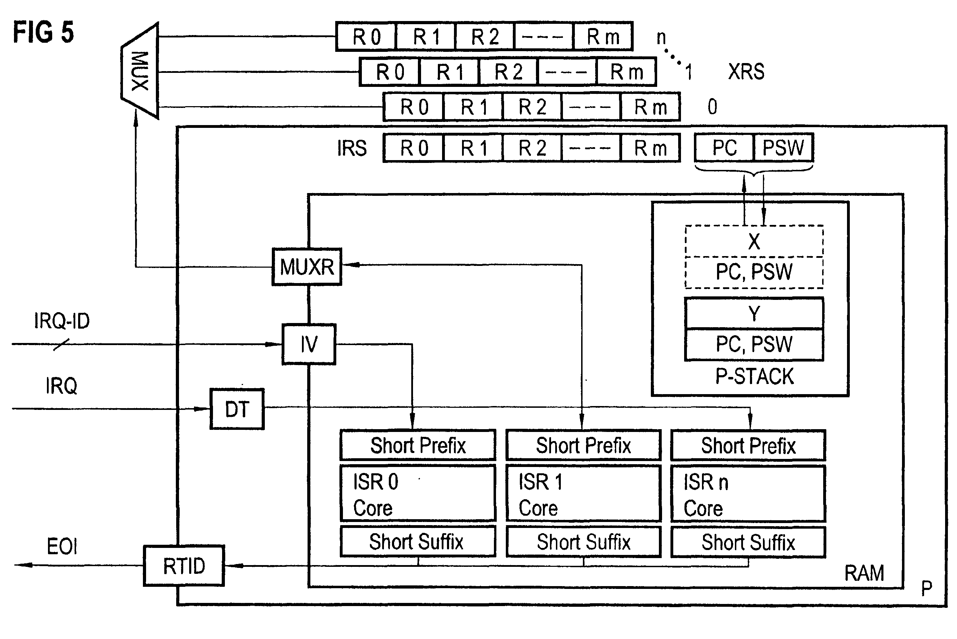

FIG. 5 zeigt eine Detailansicht des Interruptsystems mit einem Prozessor P und dem Interruptvector IV aus der Interrupt-Input/Outputeingangvector-Tabelle IV, Interruptdetector DT, Interruptroutinen-Ende-Erkennung RTID, Multiplexerregister MUXR, Multiplexer MUX, Interner Registersatz IRS, externe Registersätze XRS0-n sowie dem Prozessorspeicher RAM, wobei der Prozessorspeicher RAM wiederum Untermodule wie den Prozessor-Stack P-STACK der auch als erster Speicher bezeichnet werden kann und Interruptserviceroutinen ISR0-n enthält. Die Interruptserviceroutinen ISR0-n unterteilen sich jeweils in Short-Prefix, ISR-Core, und Short-Suffix. Der Registersatz IRS ist in Programmzähler PC, Prozessorstatuswort PSW und Arbeitsregister Reg0-m unterteilt. Die Arbeitsregister des Internen Registersatzes sind phsikalisch nicht mit im Prozessor vorhanden, sondern mit denen des jeweils ausgewählten externen Registersatzes identisch. Das heißt, physikalisch handelt es sich um die selben Register.

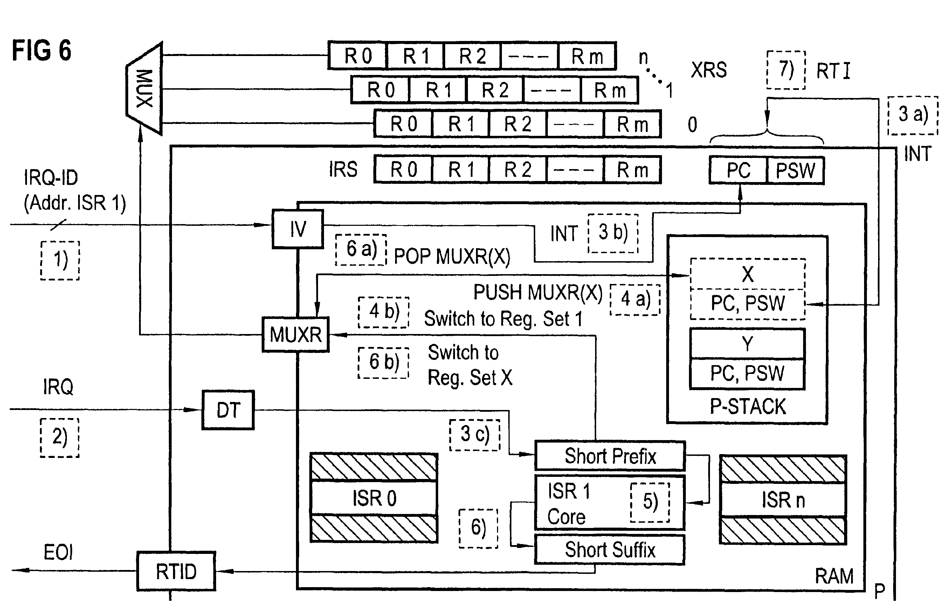

FIG 6. Zeigt ein Ablaufdiagramm der Interruptbehandlung gemäß der Erfindung. Zu Beginn soll bereits die ISR-X auf dem Registersatz X laufen. Im Multiplexer-Register MUXR ist die Kennung des Registersatzes X, kurz X gespeichert. Der Ablauf bei einem Interrupt ist dann wie folgt:
1) Übertragen der Adresse der Interruptserviceroutine ISR (IRQ-ID) vom Interruptcontroller IC in die Interruptvectortabelle IV.
2) Absetzen des Interruptrequest IRQ vom Interruptcontroller IC beim Prozessor P. Erkennen des HW-Interrupts durch das Interruptdetectormodul DT,
3) Ausführen des Befehls INT, beenden der gerade laufenden Instruktion und Leeren der Pipeline
   a) Retten des Program-Counter PC und des Prozessor-Status-Worts PSW, oder Prozessorstatusregisters PSR auf den Prozessor-Stack P-STACK (Speicherbereich, auf den der Stack-Pointer zeigt).
   b) Laden der Adresse der Interruptserviceroutine ISR1, die sich in der Interruptvectortabelle IV befindet in das PC-Register.
   c) Fortsetzung des Programmlaufs an der Adresse der Interruptserviceroutine ISR1.
4)Ausführen des Short-Prefix der Interruptserviceroutine ISR1:
   PUSH MUXR (übertragen der aktuellen Registersatzkennung, hier X, auf den Prozessorstack)
   (a)Schreiben der Registersatzkennung der Interruptserviceroutine ISR-1, kurz 1, in den Register-Set-Selection-Vector. Dadurch Umschalten des Registersatzes von X auf 1.
5)Ausführen des eigentlichen Codes der ISR (ISR1-Core)
6)(Ausführen des Short-Suffix von ISR1:)
   (a)POP vom P-STACK (Wert ist X),
   (b)Schreiben dieses Wertes X in das Multiplexer-Register MUXR. Dadurch Umschalten des Registersatzes von 1 auf X.
7)Ausführen des Befehls Return from Interrupt RTI: Restaurieren des Programmzählers PC und des Prozessor-Status-Worts PSW vom Prozessor-Stack P-STACK, Erhöhen des PC

Fortsetzen der unterbrochenen Interruptserviceroutine (ISR-X) (nicht abgebildet)

## Patentansprüche

1. Schaltungsanordnung zur Abarbeitung von Hardware-Interruptanforderungen an einem Prozessor (P), wobei der Prozessor (P) mindestens einen ersten Speicher (P-STACK) aufweist,
**dadurch gekennzeichnet**,
daß ein zweiter Speicher (XRS) vorgesehen ist in dem Daten von Interruptserviceroutinen abgerufen oder zwischengespeichert werden,
daß im ersten Speicher (P-STACK) Adressen von Speicherbereichen des zweiten Speichers (XRS) von aktuell bearbeiteten Interruptserviceroutinen bei Unterbrechungen dieser abspeicherbar sind,
daß über Auswahleinheiten (MUXR, MUX) eine Verbindung zu Speicherbereichen des zweiten Speichers (XRS) herstellbar ist.

2. Anordnung nach Anspruch 1,
**dadurch gekennzeichnet**,
daß der zweite Speicher (XRS 0-n) außerhalb des Prozessors (P) angeordnet ist.

3. Anordnung nach Anspruch 1,
**dadurch gekennzeichnet**,
daß der zweite in Speicherbereiche untergliederte Speicher (XRS) in Register (R0, ..., Rm) untergliedert und zu Registersätzen (XRS 0-n) zusammengefaßt ist.

4. Anordnung nach Anspruch 3,
**dadurch gekennzeichnet**,
daß eine Vielzahl von Registersätzen (XRS 0-n) vorgesehen sind, wobei die Anzahl der Registersätze (XRS 0-n) mindenstens der Anzahl der möglichen Interruptserviceroutinen entspricht.

5. Anordnung nach Anspruch 1,
**dadurch gekennzeichnet**,
daß die Registerinhalte (XRS 0-n) über Auswahleinheiten erreichbar sind,
daß die Auswahleinheiten aus einem Multiplexregister (MUXR) und einem Multiplexer (MUX) gebildet sind.

6. Anordnung nach Anspruch 3,
**dadurch gekennzeichnet**,
daß vor einem Hardware-Interrupt die aktuelle Registerkennung oder Registersatzkennung durch einen PUSH-Befehl in dem ersten Speicher (P-STACK) zwischenspeicherbar ist,
daß am Ende eines Hardware-Interrupts die Registersatzkennung (XRS 0-n) die aktuelle Registerkennung oder Registersatzkennung (XRS 0-n) durch einen POP-Befehl in das Multiplexregister (MUXR) ladbar ist.

7. Verfahren zur zur Abarbeitung von Hardware-Interruptanforderungen an einem Prozessor, wobei der Prozessor mindestens einen ersten Speicher (P-STACK) für Interruptserviceroutinen aufweist,
**dadurch gekennzeichnet,**
daß ein zweiter Speicher (XRS) vorgesehen wird, in dem Daten Interruptserviceroutinen abgerufen oder zwischengespeichert werden,
daß im ersten Speicher (P-STACK) Adressen von Speicherbereichen des zweiten Speichers (XRS) von aktuell bearbeiteten Interruptserviceroutinen bei Unterbrechungen dieser abgespeichert werden und
daß über Auswahleinheiten (MUXR, MUX) eine Verbindung zu Speicherbereichen des zweiten Speichers (XRS) hergestellt wird.

8. Verfahren nach Anspruch 7,
**dadurch gekennzeichnet**,
daß vor einem Hardware-Interrupt die aktuelle Registerkennung oder Registersatzkennung durch einen PUSH-Befehl in dem ersten Speicher (P-STACK) zwischengespeichert wird,
daß am Ende eines Hardware-Interrupts die Registersatzkennung (XRS 0-n) die aktuelle Registerkennung oder Registersatzkennung (XRS 0-n) durch einen POP-Befehl in das Multiplexregister (MUXR) geladen wird.
